# EUROPEAN PATENT APPLICATION

(11) **EP 3 253 127 A1**
(43) Date of publication of application: **06.12.2017**
(21) Application number: 15882968.9
(22) Date of filing: 27.02.2015
(51) Int. Cl.: H04W 48/08

(54) **ACCESS POINT (AP) DISCOVERY METHOD AND APPARATUS**

(71) Applicant: Huawei Technologies Co., Ltd., Longgang District Shenzhen, Guangdong 518129 (CN)
(72) Inventor: PANG, Gaokun, Shenzhen Guangdong 518129 (CN); FANG, Ping, Shenzhen Guangdong 518129 (CN)
(74) Representative: Isarpatent
(86) International application number: PCT/CN2015/073383
(87) International publication number: WO 2016/134530

(57) **Abstract**

The present invention discloses an access point AP discovery method and apparatus, where the method is applied to a neighbor awareness network NAN, the NAN includes a first device and a second device, and the method includes: sending, by the first device, a query message to the second device by using the NAN, where the query message is used to search for an access point AP; and receiving a response message that the second device sends in response to the query message, where the response message includes description information, of at least one AP, obtained by the second device. The method and the apparatus provided in the present invention resolve a prior-art problem that an access point AP discovery manner wastes excessive air interface resources.

## Description

### TECHNICAL FIELD

The present invention relates to the electronic information field, and in particular, to an access point AP discovery method and apparatus.

### BACKGROUND

A Wireless Fidelity (WIreless-Fidelity, Wi-Fi) technology is a short-range wireless communications technology. A basic standard for the Wi-Fi technology is the 802.11 protocol. A commonly used structure of the Wi-Fi technology has a central node, which is referred to as an access point (Access Point, AP). The access point periodically sends a beacon (beacon) message to the outside to announce existence of a network. Another node is referred to as a station (Station, STA), which learns existence of the AP by actively sending a probe request (probe request) and then receiving a probe response (probe response) or passively receiving a beacon. Then, the station joins a network of the AP by exchanging a message with the AP.

To establish an association with the AP and join the network of the AP, the STA needs to discover the AP first. An AP discovery method provided by the prior art includes the following implementation manners:

### 1. Active discovery method:

The STA performs scanning on different channels to discover an AP. To discover an AP, the STA needs to send a probe request message on different channels, and waits for a response message of an AP. On an AP side, if receiving the probe request sent by the STA, an AP sends a response message, where the response message may include detailed description information of the AP, such as a service parameter supported by the AP, and an authentication type supported by the AP.

After discovering the AP, the STA can establish a connection to the AP.

### 2. Passive discovery method:

The STA listens to, on different channels, a beacon message sent by an AP. An AP sends a beacon message in a beacon period of the AP, where the beacon message carries detailed information of the AP, including a service parameter supported by the AP, an authentication type supported by the AP, and the like. Therefore, after sensing the AP, the STA can establish a connection to the AP.

In conclusion, in the solution provided by the prior art, if a STA device wants to discover APs as many as possible, the STA device needs to perform scanning on all channels, so as to obtain information of APs on different channels. For example, on 2.4 G, the STA needs to perform scanning on channels 1 to 11 to perform AP discovery. The STA sends a probe request message on the channels 1 to 11, and an AP returns a probe response message, which consumes an air interface message. In an environment in which STAs are relatively dense, when a large quantity of STA devices perform AP discovery by scanning, a scan-to-discover process wastes excessive air interface resources. In addition, on a STA side, power consumption of the STA side is increased due to a need of scanning on different channels.

### SUMMARY

The present invention provides an access point AP discovery method and apparatus. The method and the apparatus provided in the present invention resolve a prior-art problem that an access point AP discovery manner wastes excessive air interface resources.

According to a first aspect, an access point AP discovery method is provided, where the method is applied to a neighbor awareness network NAN, the NAN includes a first device and a second device, and the method includes:
sending, by the first device, a query message to the second device by using the NAN, where the query message is used to search for an access point AP; and
receiving a response message that the second device sends in response to the query message, where the response message includes description information, of at least one AP, obtained by the second device.

With reference to the first aspect, in a first possible implementation manner, the AP description information includes: AP description information obtained when the second device is used as an AP and/or AP description information, obtained by the second device, associated with the second device.

With reference to the first possible implementation manner of the first aspect, in a second possible implementation manner, the AP description information, obtained by the second device, of an AP associated with the second device includes: first AP description information of a neighbor AP of the second device; or second AP description information obtained when the second device searches for an AP; or third AP description information obtained when the second device receives AP information that another device registers at the second device, where the third AP description information is AP description information obtained by the another device.

With reference to the first aspect or the first to the second possible implementation manners of the first aspect, in a third possible implementation manner, the sending, by the first device, a query message to the second device by using the NAN includes:
determining, according to channel and time information, a service window for sending the query message, and sending the query message to the second device by using the determined service window, where the second device is in a working state within a specified time corresponding to the service window.

With reference to the third possible implementation manner of the first aspect, in a fourth possible implementation manner, the receiving a response message that the second device sends in response to the query message includes:
receiving the response message in the service window for sending the query message; and/or
receiving the response message on a channel and within a time that are corresponding to preset channel information and time information.

With reference to the first aspect or the first to the fourth possible implementation manners of the first aspect, in a fifth possible implementation manner, the query message carries a characteristic parameter, so that the second device that receives the query message adds, to the response message, AP description information that matches the characteristic parameter.

With reference to the first aspect or the first to the fifth possible implementation manners of the first aspect, in a sixth possible implementation manner, before the sending, by the first device, a query message to the second device by using the NAN, the method further includes:
receiving, by the first device, service support information that is of a service supported by the NAN and that is sent by a device in the NAN; and
when it is determined, according to the service support information, that the service supported by the NAN includes a service for searching for an access point AP, synchronizing to the NAN.

According to a second aspect, an access point AP discovery method is provided, where the method is applied to a neighbor awareness network NAN, the NAN includes a first device and a second device, and the method includes:
receiving, by the second device by using the NAN, a query message sent by the first device, where the query message is used to search for an access point AP; and
sending, by the second device in response to the query message, a response message to the first device, where the response message includes description information, of at least one AP, obtained by the second device.

With reference to the second aspect, in a first possible implementation manner, the AP description information includes: AP description information obtained when the second device is used as an AP and/or AP description information, obtained by the second device, of an AP associated with the second device.

With reference to the first possible implementation manner of the second aspect, in a second possible implementation manner, the AP description information, obtained by the second device, of each AP associated with the second device includes: first AP description information of a neighbor AP of the second device; or second AP description information obtained when the second device searches for an AP; or third AP description information obtained when the second device receives AP information that another device registers at the second device, where the third AP description information is AP description information obtained by the another device.

With reference to the second aspect, or the first to the second possible implementation manners of the second aspect, in a third possible implementation manner, the receiving, by the second device by using the NAN, a query message sent by the first device includes:
determining, according to channel and time information, a service window for receiving the query message, and receiving the query message by using the determined service window, where the second device is in a working state within a specified time corresponding to the service window.

With reference to the second aspect or the first to the third possible implementation manners of the second aspect, in a fourth possible implementation manner, before the sending, by the second device in response to the query message, a response message to the first device, the method further includes:
obtaining, by the second device, a characteristic parameter carried in the query message, and adding, to the response message, AP description information that matches the characteristic parameter.

With reference to the fourth possible implementation manner of the second aspect, in a fifth possible implementation manner, before the adding, to the response message, AP description information that matches the characteristic parameter, the method further includes:
determining, by the second device according to the characteristic parameter, whether there exists AP description information that matches the characteristic parameter and is in the obtained description information of at least one AP, and if there exists AP description information that matches the characteristic parameter and is in the obtained description information of at least one AP, adding at least one piece of the matched AP description information to the response message.

According to a third aspect, an access point AP discovery method is provided, where the method is applied to a neighbor awareness network NAN, the NAN includes a first device and a second device, and the method includes:
obtaining, by the first device by using the NAN, a message sent by the second device; and
detecting, by the first device, whether the message includes access point AP description information that the first device needs to obtain, and if the message includes the access point AP description information that the first device needs to obtain, obtaining the AP description information from the message.

With reference to the third aspect, in a first possible implementation manner, the method further includes:
if the message does not include the AP description information that the first device needs to obtain, sending, by the first device, a query message to a third device in the NAN, where the query message is used to search for an AP; and
receiving a response message that the third device sends in response to the query message, where the response message includes description information, of at least one AP, obtained by the third device.

With reference to the first possible implementation manner of the third aspect, in a second possible implementation manner, the obtaining, by the first device by using the NAN, a message sent by the second device includes:
determining, according to channel and time information, a service window for receiving the message sent by the second device, and obtaining, by using the determined service window, the message sent by the second device, where the second device is in a working state within a specified time corresponding to the service window.

With reference to the third aspect or the first to the second possible implementation manners of the third aspect, in a third possible implementation manner, the obtaining, by the first device by using the NAN, a message sent by the second device includes:
receiving, by the first device, a first message broadcasted by the second device; and
sensing, by the first device, a second message that the second device responds to another device in the NAN.

According to a fourth aspect, an access point AP discovery apparatus is provided, where the apparatus is applied to a neighbor awareness network NAN, the NAN includes a first device and a second device, the apparatus is disposed in the first device, and the apparatus includes:
a sending module, configured to send a query message to the second device by using the NAN, where the query message is used to search for an access point AP; and
a receiving module, configured to receive a response message that the second device sends in response to the query message, where the response message includes description information, of at least one AP, obtained by the second device.

With reference to the fourth aspect, in a first possible implementation manner, the AP description information received by the receiving module includes: AP description information obtained when the second device is used as an AP and/or AP description information, obtained by the second device, associated with the second device.

With reference to the first possible implementation manner of the fourth aspect, in a second possible implementation manner, the AP description information, obtained by the second device and received by the receiving module, of an AP associated with the second device includes: first AP description information of a neighbor AP of the second device; or second AP description information obtained when the second device searches for an AP; or third AP description information obtained when the second device receives AP information that another device registers at the second device, where the third AP description information is AP description information obtained by the another device.

With reference to the fourth aspect or the first to the second possible implementation manners of the fourth aspect, in a third possible implementation manner, the sending module is specifically configured to determine, according to channel and time information, a service window for sending the query message, and send the query message to the second device by using the determined service window, where the second device in the NAN is in a working state within a specified time corresponding to the service window.

With reference to the third possible implementation manner of the fourth aspect, in a fourth possible implementation manner, the receiving module is specifically configured to receive the response message in the service window for sending the query message; and/or receive the response message on a channel and within a time that are corresponding to preset channel information and time information.

With reference to the fourth aspect or the first to the fourth possible implementation manners of the fourth aspect, in a fifth possible implementation manner, the sending module is further configured to add a characteristic parameter to the query message, so that the second device that receives the query message adds, to the response message, AP description information that matches the characteristic parameter.

With reference to the fourth aspect or the first to the fifth possible implementation manners of the fourth aspect, in a sixth possible implementation manner, the apparatus further includes:
a synchronization module, configured to receive service support information that is of a service supported by the NAN and that is sent by a device in the NAN; and when it is determined, according to the service support information, that the service supported by the NAN includes a service for searching for an access point AP, synchronize to the NAN.

According to a fifth aspect, an access point AP discovery apparatus is provided, where the apparatus is applied to a neighbor awareness network NAN, the NAN includes a first device and a second device, the apparatus is disposed in the second device in the neighbor awareness network NAN, and the apparatus includes:
a message receiving module, configured to receive, by using the NAN, a query message sent by the first device, where the query message is used to search for an access point AP; and
a feedback module, configured to send a response message to the first device in response to the query message, where the response message includes description information, of at least one AP, obtained by the second device.

With reference to the fifth aspect, in a first possible implementation manner, the feedback module is configured to add the AP description information to the response message, where AP description information obtained when the second device is used as an AP and/or AP description information, obtained by the second device, of an AP associated with the second device are/is used as the AP description information.

With reference to the first possible implementation manner of the fifth aspect, in a second possible implementation manner, the feedback module is further configured to add the AP description information, obtained by the second device, of each AP associated with the second device to the response message, where first AP description information of a neighbor AP of the second device, or second AP description information obtained when the second device searches for an AP, or third AP description information obtained when the second device receives AP information that another device registers at the second device is used as the AP description information, obtained by the second device, of each AP associated with the second device, where the third AP description information is AP description information obtained by the another device.

With reference to the fifth aspect or the first to the second possible implementation manners of the fifth aspect, in a third possible implementation manner, the message receiving module is specifically configured to determine, according to channel and time information, a service window for receiving the query message, and receive the query message by using the determined service window, where the second device is in a working state within a specified time corresponding to the service window.

With reference to the fifth aspect or the first to the third possible implementation manners of the fifth aspect, in a fourth possible implementation manner, the apparatus further includes:
a matching module, configured to obtain a characteristic parameter carried in the query message; and add, to the response message, AP description information that matches the characteristic parameter.

With reference to the fourth possible implementation manner of the fifth aspect, in a fifth possible implementation manner, the matching module is further configured to determine, according to the characteristic parameter, whether there exists AP description information that matches the characteristic parameter and is in the obtained description information of at least one AP, and if there exists AP description information that matches the characteristic parameter and is in the obtained description information of at least one AP, add at least one piece of the matched AP description information to the response message.

According to a sixth aspect, an access point AP discovery apparatus is provided, where the apparatus is applied to a neighbor awareness network NAN, the NAN includes a first device and a second device, the apparatus is disposed in the first device, and the apparatus includes:
an obtaining module, configured to obtain, by using the NAN, a message sent by the second device; and
a detection module, configured to detect whether the message includes access point AP description information that the first device needs to obtain, and if the message includes the access point AP description information that the first device needs to obtain, obtain the AP description information from the message.

With reference to the sixth aspect, in a first possible implementation manner, the apparatus further includes:
a query module, configured to: if the message does not include the AP description information that the first device needs to obtain, send a query message to a third device in the NAN, where the query message is used to search for an AP; and receive a response message that the third device sends in response to the query message, where the response message includes description information, of at least one AP, obtained by the third device.

With reference to the first possible implementation manner of the sixth aspect, in a second possible implementation manner, the query module is specifically configured to determine, according to channel and time information, a service window for receiving the message sent by the second device, and obtain, by using the determined service window, the message sent by the second device, where the second device is in a working state within a specified time corresponding to the service window.

With reference to the sixth aspect or the first to the second possible implementation manners of the sixth aspect, in a third possible implementation manner, the obtaining module is specifically configured to receive a first message broadcasted by the second device; and/or listen to a second message that the second device responds to another device in the NAN.

According to a seventh aspect, an electronic device is provided, including:
a transceiver, configured to send a query message to a second device by using a neighbor awareness network NAN, where the query message is used to search for an access point AP; and receive a response message that the second device sends in response to the query message, where the response message includes description information, of at least one AP, obtained by the second device, and both the electronic device and the second device are in the NAN.

With reference to the seventh aspect, in a first possible implementation manner, the electronic device further includes:
a processor, configured to determine, according to channel and time information, a service window for sending the query message, where the second device in the NAN is in a working state within a specified time corresponding to the service window; and
that the transceiver sends the query message to the second device by using the NAN specifically includes: sending the query message to the second device by using the service window.

According to an eighth aspect, an electronic device is provided, where the electronic device includes:
a transceiver, configured to receive, by using a neighbor awareness network NAN, a query message sent by a first device, where the query message is used to search for an access point AP; and send a response message to the first device in response to the query message, where the response message includes description information, of at least one AP, obtained by the second device, and both the electronic device and the second device are in the NAN.

With reference to the eighth aspect, in a first possible implementation manner, the apparatus further includes:
a processor, configured to determine, according to channel and time information, a service window for receiving the query message, where the second device is in a working state within a specified time corresponding to the service window; and
that the transceiver receives, by using the NAN, the query message sent by the first device specifically includes: receiving the query message by using the service window.

According to a ninth aspect, an electronic device is provided, where the electronic device includes:
a receiver, configured to obtain, by using a neighbor awareness network NAN, a message sent by the second device; and
a processor, configured to: when the message includes access point AP description information that the electronic device needs to obtain, obtain the AP description information from the message, where both the electronic device and the second device are in the NAN.

With reference to the ninth aspect, in a first possible implementation manner, the apparatus further includes:
a transmitter, configured to: when the message does not include the AP description information that the first device needs to obtain, send a query message to a third device in the NAN, where the query message is used to search for an AP; and
the receiver is further configured to receive a response message that the third device sends in response to the query message, where the response message includes description information, of at least one AP, obtained by the third device.

With reference to the ninth aspect or the first possible implementation manner of the ninth aspect, in a second possible implementation manner, the processor is further configured to determine, according to channel and time information, a service window for receiving the message sent by the second device, where the second device is in a working state within a specified time corresponding to the service window; and
that the transmitter obtains, by using the NAN, the message sent by the second device specifically includes: obtaining, by using the service window, the message sent by the second device.

One or two of the foregoing technical solutions have at least the following technical effects:

In the solutions provided in embodiments of the present invention, after a device is synchronized to an NAN, during AP discovery, the device can directly obtain AP description information by using device sharing information included by the NAN. There is no need to send scan messages on different channels, which omits management messages consumed for performing scanning on existing multiple channels, saves air interface resources, and improves AP discovery efficiency.

### BRIEF DESCRIPTION OF DRAWINGS

FIG. 1 is a schematic flowchart of an access point AP discovery method according to Embodiment 1 of the present invention;
FIG. 2 is a schematic flowchart of an access point AP discovery method according to Embodiment 2 of the present invention;
FIG. 3 is a schematic flowchart of an access point AP discovery method according to Embodiment 3 of the present invention;
FIG. 4 is a schematic structural diagram of an access point AP discovery apparatus according to Embodiment 4 of the present invention;
FIG. 5 is a schematic structural diagram of an access point AP discovery apparatus according to Embodiment 5 of the present invention;
FIG. 6 is a schematic structural diagram of an access point AP discovery apparatus according to Embodiment 6 of the present invention;
FIG. 7 is a schematic structural diagram of an electronic device according to Embodiment 7 of the present invention;
FIG. 8 is a schematic structural diagram of an electronic device according to Embodiment 8 of the present invention; and
FIG. 9 is a schematic structural diagram of an electronic device according to Embodiment 9 of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

To describe a specific implementation process of a solution provided in the present invention more clearly and specifically, a standard - neighbor awareness network (Neighbor Awareness Network, NAN) mechanism formulated by Wi-Fi Alliance (WiFi alliance, WFA) is briefly described, which specifically includes:

A function of the NAN mechanism is to synchronize, when there is no central node, all devices that participate in the NAN mechanism, and to perform maintenance work of the NAN mechanism and service discovery work in a discovery window (discovery window, DW) agreed by the NAN mechanism. After service discovery, a device may establish a corresponding connection based on information obtained during service discovery, and transmit data.

In the NAN mechanism, one discovery window is set on a fixed channel 6 every 512 TUs (one TU (time unit) is about 1024 ms). Duration of the discovery window is 16 TUs. In the NAN, device states include: anchor master (anchor master, AM), master (master), non-master sync (non-master sync), and non-master non-sync (non-master non-sync). Each device has a fair opportunity to constantly change among the four states, and remains in one of the states.

In the NAN mechanism, devices wake up in the DW window. Devices in the states of master, anchor master, and non-master sync send a synchronization beacon (synchronization beacon, sync beacon) message. The synchronization beacon message is used by another device in a cluster (cluster) to synchronize with the AM in the cluster (a purpose is to use a time same as that of the AM). To achieve and maintain this synchronization mechanism, the NAN mechanism enables all devices to bear equal responsibilities. Each device has an opportunity to constantly change among the four states, and remains in one of the states.

All devices joining the NAN can perform service discovery in the DW window, and send a service discovery frame (service discovery frame, SDF) message. The SDF message includes a subscribe message and a publish message. When the device sends a subscribe message, it indicates that the device wants to query a service; when the device sends a publish message, it indicates that the device supports a service.

A format of the SDF message is shown in Table 1:

**Table 1**

| **Header** | **Category (=4)** | **Public Action (=9)** | **OUI (=0506F0A)** | **OUI Type (TBD)** | **NAN Attribute** |
|---|---|---|---|---|---|
| | 1 | 1 | 3 | 1 | variable |

where
Header is a header of the SDF message, indicating some information parameters included in the entire message;
Category is a category of the message, indicating a type to which the message belongs;
Public action indicates a public action frame of the SDF message;
OUI (organizationally unique identifier) indicates an identification of the device;
OUI type indicates a type of the OUI; and
NAN attribute is used to include some parameters of the NAN.

To complete service discovery, the device first performs synchronization. A specific process in which the device synchronizes to the NAN is as follows:
1. The device first performs initialization, assumes that the state of the device is AM, creates a cluster (cluster) cluster, sets a cluster ID value (may be a MAC address of the device itself), and sets a time as an integer multiple of 512 TUs.
2. When sensing a sync beacon message of another cluster (devices in the states of master, anchor master, and non-master sync in the NAN send the sync beacon message, so that another cluster detects the cluster), the device determines whether to join the cluster of the device that sends the sync beacon message. Global information of the cluster is carried in the sync beacon message. The device herein can obtain the global information of the cluster by using the sync beacon message.
3. After synchronizing to the another cluster, the device synchronizes with AM in the synchronized cluster, and sets the time of the device as the same as a time of the AM.
4. Perform service discovery (query or broadcast) in a discover window (DW, discover window) after synchronization.

A device that synchronizes to a cluster may perform service discovery by using a DW window. When the device sends a subscribe message by using the DW window, it indicates that the device wants to query a service. When the device sends a publish message, it indicates that the device supports a service.

The sync beacon is sent within the DW window or is sent beyond the DW window. When being sent beyond the DW window, the sync beacon is referred to as a NAN discovery beacon (NAN discovery beacon).

A frame format of the sync beacon message is shown in Table 2:

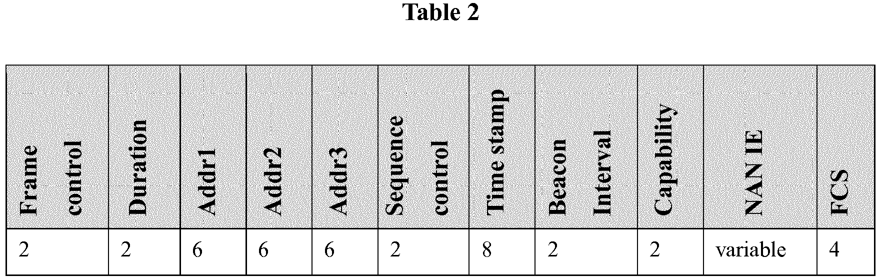

where
Frame control is a control part of a frame header, indicating some information parameters included in the entire message;
Duration is duration of the frame, indicating a time occupied by the entire message;
Addr1 (that is, Address1) is Address1;
Addr2 (that is, Address2) is Address2;
Addr3 (that is, Address3) is Address3;
Sequence control is sequence control, indicating a sequence number of the frame;
Time stamp is a time stamp, indicating a moment when the frame is sent;
Beacon interval is a beacon interval, indicating a period interval at which the beacon is sent;
Capability is a capability parameter, indicating that the device supports some capabilities;
NAN IE is a NAN element, used to include some parameters of the NAN; and
FCS is frame check sequence, indicating a check value of the frame.

With reference to the foregoing NAN mechanism and accompanying drawings of the specification, the following further specifically describes an access point AP discovery method provided in the embodiments of the present invention.

### Embodiment 1

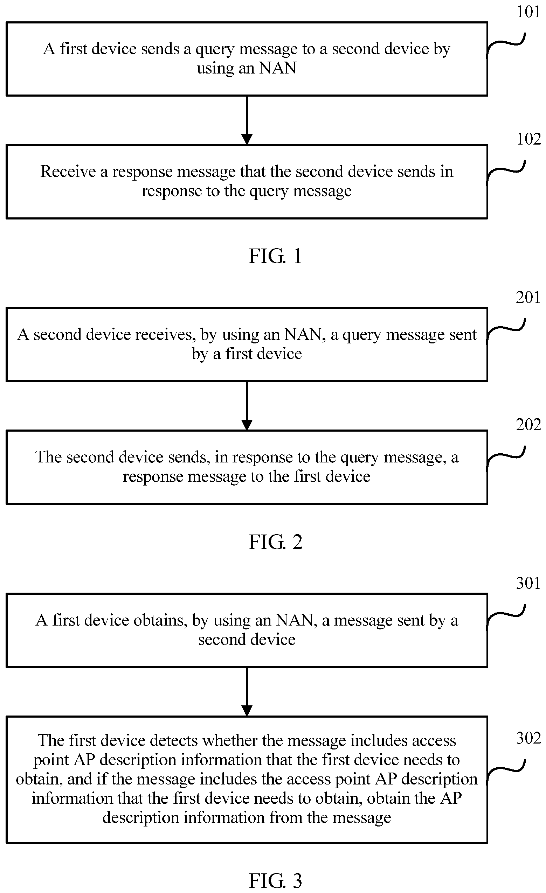

As shown in FIG. 1, this embodiment of the present invention provides an access point AP discovery method, where the method is applied to a neighbor awareness network NAN, and the NAN includes a first device and a second device. The first device in the method provided in this embodiment actively performs scanning to discover an AP, and sends a service query message in a DW window of the NAN to query AP information. A specific implementation method includes the following.

In this embodiment of the present invention, the first device implements AP discovery by using the NAN. Therefore, before performing AP discovery, the first device may synchronize to the NAN in the following manner, which specifically includes:
receiving, by the first device, service support information that is of a service supported by the NAN and that is sent by a device in the NAN; and
when it is determined, according to the service support information, that the service supported by the NAN includes a service for searching for an access point AP, synchronizing to the NAN.

In this embodiment of the present invention, specific implementation of synchronizing to the NAN by the first device may be as follows: The first device joins a Cluster (cluster) in the NAN, and synchronizes to an anchor master (Anchor Master, AM for short) in the cluster of the NAN. The first device uses an anchor master beacon transmission time (Anchor Master Beacon Transmission Time, AMBTT) in the synchronized cluster. The NAN includes one or more clusters.

For example, the first device needs to implement AP discovery by using the NAN. Therefore, if it is determined, according to service support information, that a service supported by an NAN includes AP discovery, the first device requests to synchronize to the NAN. After the first device is synchronized to the NAN, the first device performs AP discovery in a service implementation manner provided by the NAN, which specifically includes the following steps.

Step 101: The first device sends a query message to the second device by using the NAN, where the query message is used to search for an access point AP.

In this embodiment of the present invention, there may be multiple manners of sending the query message to the second device in the NAN, which may be specifically:
determining, according to channel and time information, a service window for sending the query message, and sending the query message to the second device by using the determined service window, where the second device in the NAN is in a working state within a specified time corresponding to the service window.

In this embodiment of the present invention, the working state means that a device can receive or send a message in the working state.

When the service window is being determined, a manner of obtaining the channel and time information includes: A. determine a reserved window according to preset channel and time information; and/or B. interact with a device in the NAN to obtain the channel and time information of the service window (devices in the network negotiate to determine the window).

For example, a DW (discovery window) window is a window defined in the NAN. For a time window that is synchronized among all devices in the NAN, all the devices in the time window keep awake to listen to an SDF message.

In addition, in this embodiment of the present invention, the query message may be implemented by using multiple message formats in the NAN, which specifically include: an SDF message, a beacon message, an action message, a newly defined message format, or the like.

In a specific implementation process, when the first device sends an SDF message, which is specifically sending a subscribe message, an NAN attribute is carried. The attribute may use a newly defined attribute, indicating that a service that the SDF message needs to implement is searching for an AP.

Attribute information in the SDF message is shown in Table 3:

**Table 3**

| **Field** | **Size (octets)** | **Value** | **Description** |
|---|---|---|---|
| Attribute ID | 1 | Variable (variable) | Query an AP service |
| Length | 2 | Variable (variable) | Length information |
| Service | N | Variable (variable) | To-be-queried AP parameter |

Step 102: Receive a response message that the second device sends in response to the query message, where the response message includes description information, of at least one AP, obtained by the second device.

In this embodiment of the present invention, the AP description information includes: AP description information obtained when the second device is used as an AP and/or AP description information, obtained by the second device, associated with the second device.

In addition, to provide more APs for the first device to select, the second device may send all AP description information that can be learned to the first device. Therefore, the AP description information, obtained by the second device, of an AP associated with the second device includes:
first AP description information of a neighbor AP (neighbor AP) of the second device; or second AP description information obtained when the second device searches for an AP; or third AP description information obtained when the second device receives AP information that another device registers at the second device, where the third AP description information is AP description information obtained by the another device.

In this step, for a different manner of sending the query message, a different manner of receiving the response message may be selected, including:
receiving the response message in the service window for sending the query message; and/or
receiving the response message on a channel and within a time that are corresponding to preset channel information and time information.

The response message may be the publish message in the SDF message, and the publish message carries the attitude that includes AP description information. A format of the attribute is shown in Table 4:

**Table 4**

| **Field** | **Size (octets)** | **Value** | **Description** |
|---|---|---|---|
| Attribute ID | 1 | Varialbe (variable) | Identifies the type of NAN attribute. |
| Length | 2 | Variable | Length of the following fields in the attribute. |
| MAC Address | 6 | Variable | BSSID of the AP. |
| Channel 1 | 1 | Variable | Channel on which an AP is located |
| | | | A device only needs to discover a target AP on this channel, and does not need to perform scanning on channels 1 to 11. |
| TBTT | Variable | Variable | Beacon transmission time of the target AP |
| | | | To determine the target AP, the device only needs to listen to a beacon message of the AP on the foregoing channel, and then initiates an |
| | | | association. |

In addition, the response message may be sent in a broadcast manner. Therefore, when the second device responds to the first device, the AP information is announced, preventing another device from independently sending the publish message, and helping another device that queries the AP to discover the AP information. If one device responds to the service query, another device in the network does not send the response message anymore.

Further, during AP discovery, the first device may discover any AP or may selectively discover some APs or a specific AP. Therefore, during query message sending, a different query message may be sent according to a different requirement of AP discovery. Specific implementation includes:
1. If any AP is to be discovered, an information parameter is not carried, and only a service for querying an AP is sent.
2. If an AP of a specified parameter is to be discovered, specific implementation may be:
   adding a characteristic parameter to the query message, so that the second device that receives the query message adds, to the response message, AP description information that matches the characteristic parameter.

The characteristic parameter may be one or more parameters of FILS Criteria (fast initial link setup criteria), Max Delay Limit (max delay limit), Minimum Data Rate (minimum data rate), RCPI (received channel power indicator) Limit (received channel power indicator), OUI (organizationally unique identifier) Response Criteria (identifier response criteria), Max Channel Time (max channel time), Hashed Domain Information (hashed domain information), bandwidth parameter, delay parameter, security parameter (the security parameter may carry pre-shared information, which is used to discover a secure AP device; and may be a hash value for sending a public key, or an SSID (service set ID) hash value, a service hash value), load (load) parameter, transmission rate, signal strength, and the like, which are used to query the specified AP. Alternatively, the characteristic parameter may be information in FILS (Fast Initial Link setup, fast initial link setup) Request Parameters element of the 802.11 ai, and is used to query the specified AP.

If an SDF message is selected to send the service query message in a specific embodiment, the characteristic parameter may be carried in Attribute information; or an existing Service Descriptor Attribute (SDA) is modified, and the characteristic parameter is carried in description of the SDA.

In the solution provided in this embodiment of the present invention, after a device is synchronized to an NAN, during AP discovery, the device can directly obtain AP description information by using device sharing information included by the NAN. There is no need to send scan messages on different channels, which omits management messages consumed for performing scanning on existing 11 channels, saves air interface resources, and improves AP discovery efficiency.

In this embodiment, a response message includes all AP information that a response device knows, thereby increasing a quantity of discovered APs, and shortening a device discovery time.

In addition, before joining the NAN, the first device may discover whether the NAN supports a service for querying an AP. If the NAN supports the service for querying an AP, the first device joins the NAN, and executes a subsequent AP querying operation, thereby accelerating device discovery and omitting management messages.

### Embodiment 2

As shown in FIG. 2, this embodiment of the present invention further provides another access point AP discovery method, where the method is applied to a neighbor awareness network NAN, the NAN includes a first device and a second device, and the method includes the following steps.

Step 201: The second device receives, by using the NAN, a query message sent by the first device, where the query message is used to search for an access point AP.

In this embodiment, a specific implementation manner in which the second device receives, by using the neighbor awareness network NAN, the query message sent by the first device may be as follows:

The second device determines, according to channel and time information, a service window for receiving the query message, and receives the query message by using the determined service window, where the second device is in a working state within a specified time corresponding to the service window.

Step 202: The second device sends, in response to the query message, a response message to the first device, where the response message includes description information, of at least one AP, obtained by the second device.

In this embodiment of the present invention, the AP description information includes: AP description information obtained when the second device is used as an AP and/or AP description information, obtained by the second device, of an AP associated with the second device.

In addition, to provide more APs for the first device to select, the second device may send all AP description information that can be learned to the first device. Therefore, the AP description information, obtained by the second device, of the AP associated with the second device includes:
first AP description information of a neighbor AP of the second device; or second AP description information obtained when the second device searches for an AP; or third AP description information obtained when the second device receives AP information that another device registers at the second device, where the third AP description information is AP description information obtained by the another device.

Further, to reduce transmission of redundant information and improve utilization of the response information, the second device may feed back, according to a demand of the first device, AP description information that meets a specific requirement. Therefore, before the second device sends, in response to the query message, the response message to the first device, the method further includes:

The second device obtains a characteristic parameter carried in the query message, and adds, to the response message, AP description information that matches the characteristic parameter.

Before the second device sends the response message carrying the AP information that matches the characteristic parameter, AP description information that meets a condition may be determined according to the following method, where a specific implementation method includes:

The second device determines, according to the characteristic parameter, whether there exists AP description information that matches the characteristic parameter and is in the obtained description information of at least one AP, and if there exists AP description information that matches the characteristic parameter and is in the obtained description information of at least one AP, adds at least one piece of the matched AP description information to the response message.

In the solution provided in this embodiment of the present invention, after a device is synchronized to an NAN, during AP discovery, the device can directly obtain AP description information by using device sharing information included by the NAN. There is no need to send scan messages on different channels, which omits management messages consumed for performing scanning on existing 11 channels, saves air interface resources, and improves AP discovery efficiency.

In addition, a response message includes all AP information that a response device knows, thereby increasing a quantity of discovered APs, and shortening a device discovery time. In addition, the second device may further query a specific AP according to the characteristic parameter carried in the query message. Therefore, the response message fed back by the second device is more pertinent, which can reduce sending of redundant information and save resources.

### Embodiment 3

As shown in FIG. 3, this embodiment of the present invention further provides another access point AP discovery method, where the method is applied to a neighbor awareness network NAN, the NAN includes a first device and a second device, and the method includes the following steps.

Step 301: The first device obtains, by using the NAN, a message sent by the second device.

In this embodiment, the first device obtains, in a passive manner, the message sent by the second device, and obtains, by detecting the received message, AP description information that the first device needs.

The first device may obtain, in the following two manners, the message sent by the second device in the NAN.
A. The first device receives a first message broadcasted by the second device.
B. The first device listens to a second message that the second device responds to another device in the NAN.

Based on the foregoing two message obtaining manners, the first device may use a specific window provided by the NAN to obtain the first message and the second message. Specifically, that the first device obtains, by using the NAN, the message sent by the second device includes:
determining, according to channel and time information, a service window for receiving the message sent by the second device, and obtaining, by using the determined service window, the message sent by the second device, where the second device is in a working state within a specified time corresponding to the service window.

Step 302: The first device detects whether the message includes access point AP description information that the first device needs to obtain, and if the message includes the access point AP description information that the first device needs to obtain, obtains the AP description information from the message.

In addition, if none of messages obtained by the first device in a passive manner includes an accessible AP, the first device may obtain needed AP description information by sending a query message. A specific method includes (a specific and detailed implementation process is the same as that in the solution provided in Embodiment 1):

If the message does not include the AP description information that the first device needs to obtain, the first device sends a query message to a third device in the NAN, where the query message is used to search for an AP; and
receives a response message that the third device sends in response to the query message, where the response message includes description information, of at least one AP, obtained by the third device.

In this embodiment, the first device obtains the AP information by passively receiving the message, which saves resources for independently sending the query message.

### Embodiment 4

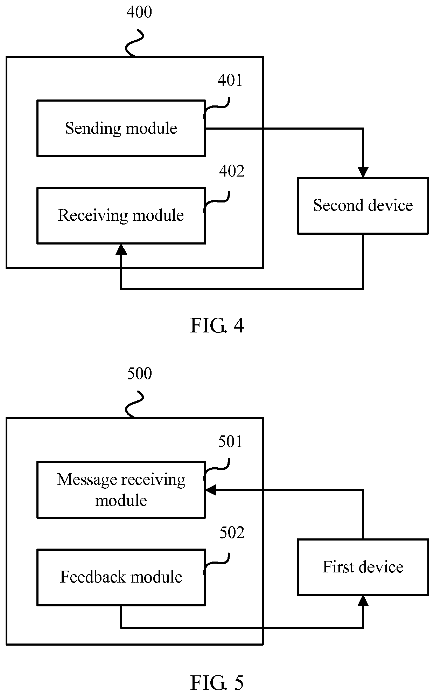

As shown in FIG. 4, this embodiment of the present invention further provides an access point AP discovery apparatus 400, where the apparatus is applied to a neighbor awareness network NAN, the NAN includes a first device and a second device, the apparatus is disposed in the first device, and the apparatus includes a sending module 401 and a receiving module 402.

The sending module 401 is configured to send a query message to the second device by using the NAN, where the query message is used to search for an access point AP.

The sending module may use a window provided by the NAN to send the query message. Therefore, that the sending module 401 sends the query message specifically includes:
determining, according to channel and time information, a service window for sending the query message, and sending the query message to the second device by using the determined service window, where the second device in the NAN is in a working state within a specified time corresponding to the service window.

Further, to enable the second device to feed back more pertinent AP description information, when sending the query message, the first device may specify a characteristic of needed AP information.

Therefore, the sending module 401 is further configured to add a characteristic parameter to the query message, so that the second device that receives the query message adds, to the response message, AP description information that matches the characteristic parameter.

The receiving module 402 is configured to receive a response message that the second device sends in response to the query message, where the response message includes description information, of at least one AP, obtained by the second device.

Based on an implementation manner in which the sending module sends the query message, specific implementation of sending the response message by the receiving module 402 may be: receiving the response message in the service window for sending the query message; and/or receiving the response message on a channel and within a time that are corresponding to preset channel information and time information.

The AP description information received by the receiving module 402 includes: AP description information obtained when the second device is used as an AP and/or AP description information, obtained by the second device, associated with the second device.

Further, the AP description information, obtained by the second device and received by the receiving module 402, of an AP associated with the second device includes: first AP description information of a neighbor AP of the second device; or second AP description information obtained when the second device searches for an AP; or third AP description information obtained when the second device receives AP information that another device registers at the second device, where the third AP description information is AP description information obtained by the another device.

Further, the first device implements AP discovery by using the NAN. Therefore, the apparatus may synchronize to the NAN by using a synchronization module, which specifically includes:

The synchronization module is configured to receive service support information that is of a service supported by the NAN and that is sent by a device in the NAN; and when it is determined, according to the service support information, that the service supported by the NAN includes a service for searching for an access point AP, synchronize to the NAN.

### Embodiment 5

As shown in FIG. 5, this embodiment of the present invention provides another access point AP discovery apparatus 500, where the apparatus is applied to a neighbor awareness network NAN, the NAN includes a first device and a second device, the apparatus is disposed in the second device in the neighbor awareness network NAN, and the apparatus includes:
a message receiving module 501, configured to receive, by using the NAN, a query message sent by the first device, where the query message is used to search for an access point AP; where
the message receiving module 501 is specifically configured to determine, according to channel and time information, a service window for receiving the query message, and receive the query message by using the determined service window, where the second device is in a working state within a specified time corresponding to the service window; and
a feedback module 502, configured to send a response message to the first device in response to the query message, where the response message includes description information, of at least one AP, obtained by the second device.

The feedback module 502 is configured to add the AP description information to the response message, where AP description information obtained when the second device is used as an AP and/or AP description information, obtained by the second device, of an AP associated with the second device are/is used as the AP description information.

The feedback module 502 is further configured to add the AP description information, obtained by the second device, of each AP associated with the second device to the response message, where first AP description information of a neighbor AP of the second device, or second AP description information obtained when the second device searches for an AP, or third AP description information obtained when the second device receives AP information that another device registers at the second device is used as the AP description information, obtained by the second device, of each AP associated with the second device, where the third AP description information is AP description information obtained by the another device.

If the first device is to discover an AP of a specified parameter, the apparatus may further include:
a matching module, configured to obtain a characteristic parameter carried in the query message; and add, to the response message, AP description information that matches the characteristic parameter.

The matching module is further configured to determine, according to the characteristic parameter, whether there exists AP description information that matches the characteristic parameter and is in the obtained description information of at least one AP, and if there exists AP description information that matches the characteristic parameter and is in the obtained description information of at least one AP, add at least one piece of the matched AP description information to the response message.

### Embodiment 6

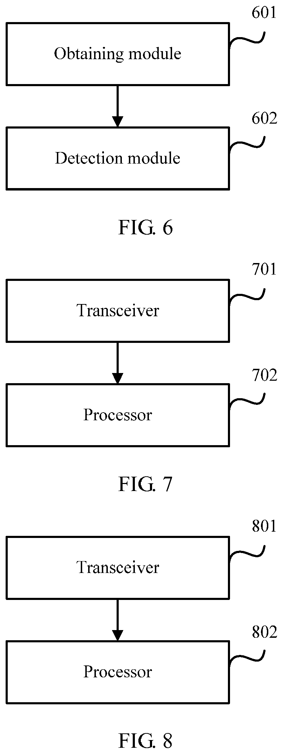

As shown in FIG. 6, this embodiment of the present invention further provides another access point AP discovery apparatus, where the apparatus is applied to a neighbor awareness network NAN, the NAN includes a first device and a second device, the apparatus is disposed in the first device, and the apparatus includes:
an obtaining module 601, configured to obtain, by using the NAN, a message sent by the second device, where
the obtaining module 601 is specifically configured to receive a first message broadcasted by the second device; and/or listen to a second message that the second device responds to another device in the NAN; and
a detection module 602, configured to detect whether the message includes access point AP description information that the first device needs to obtain, and if the message includes the access point AP description information that the first device needs to obtain, obtain the AP description information from the message.

In addition, if the message does not include the access point AP description information that the first device needs to obtain, the apparatus may obtain the AP description information in a manner of active query, where the apparatus further includes:
a query module, configured to: if the message does not include the AP description information that the first device needs to obtain, send a query message to a third device in the NAN, where the query message is used to search for an AP; and receive a response message that the third device sends in response to the query message, where the response message includes description information, of at least one AP, obtained by the third device.

The query module is specifically configured to determine, according to channel and time information, a service window for receiving the message sent by the second device, and obtain, by using the determined service window, the message sent by the second device, where the second device is in a working state within a specified time corresponding to the service window.

### Embodiment 7

As shown in FIG. 7, this embodiment of the present invention further provides another electronic device, where the electronic device includes:
a transceiver 701, configured to send a query message to a second device by using a neighbor awareness network NAN, where the query message is used to search for an access point AP; and receive a response message that the second device sends in response to the query message, where the response message includes description information, of at least one AP, obtained by the second device, and both the electronic device and the second device are in the NAN.

The AP description information received by the transceiver includes: AP description information obtained when the second device is used as an AP and/or AP description information, obtained by the second device, associated with the second device. The AP description information, obtained by the second device, of an AP associated with the second device includes: first AP description information of a neighbor AP of the second device; or second AP description information obtained when the second device searches for an AP; or third AP description information obtained when the second device receives AP information that another device registers at the second device, where the third AP description information is AP description information obtained by the another device.

The apparatus further includes:
a processor 702, configured to determine, according to channel and time information, a service window for sending the query message, where the second device in the NAN is in a working state within a specified time corresponding to the service window; and
that the transceiver sends the query message to the second device by using the NAN specifically includes: sending the query message to the second device by using the service window.

Correspondingly, the transceiver is further configured to receive the response message in the service window for sending the query message; and/or receive the response message on a channel and within a time that are corresponding to preset channel information and time information.

Optionally, the processor is further configured to add a characteristic parameter to the query message, so that the second device that receives the query message adds, to the response message, AP description information that matches the characteristic parameter.

Optionally, the processor is further configured to receive service support information that is of a service supported by the NAN and that is sent by a device in the NAN; and when it is determined, according to the service support information, that the service supported by the NAN includes a service for searching for an access point AP, synchronize to the NAN.

### Embodiment 8

As shown in FIG. 8, the present invention further provides an electronic device, where the electronic device includes:
a transceiver 801, configured to receive, by using a neighbor awareness network NAN, a query message sent by a first device, where the query message is used to search for an access point AP; and send a response message to the first device in response to the query message, where the response message includes description information, of at least one AP, obtained by the second device, and both the electronic device and the second device are in the NAN.

The transceiver is further configured to add the AP description information to the response message, where AP description information obtained when the second device is used as an AP and/or AP description information, obtained by the second device, of an AP associated with the second device are/is used as the AP description information.

Optionally, the transceiver is further configured to add the AP description information, obtained by the second device, of each AP associated with the second device to the response message, where first AP description information of a neighbor AP of the second device, or second AP description information obtained when the second device searches for an AP, or third AP description information obtained when the second device receives AP information that another device registers at the second device is used as the AP description information, obtained by the second device, of each AP associated with the second device, where the third AP description information is AP description information obtained by the another device.

Optionally, the electronic device may further include:
a processor 802, configured to determine, according to channel and time information, a service window for receiving the query message, where the second device is in a working state within a specified time corresponding to the service window; and
that the transceiver receives, by using the NAN, the query message sent by the first device specifically includes: receiving the query message by using the service window.

Optionally, the processor is further configured to obtain a characteristic parameter carried in the query message; and add, to the response message, AP description information that matches the characteristic parameter.

Optionally, the processor is further configured to determine, according to the characteristic parameter, whether there exists AP description information that matches the characteristic parameter and is in the obtained description information of at least one AP, and if there exists AP description information that matches the characteristic parameter and is in the obtained description information of at least one AP, add at least one piece of the matched AP description information to the response message.

### Embodiment 9

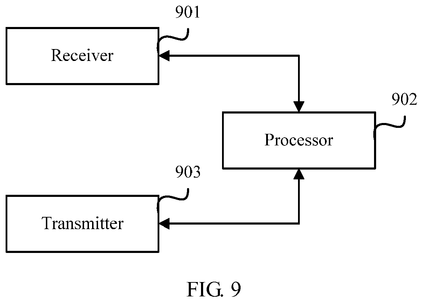

As shown in FIG. 9, this embodiment of the present invention further provides an electronic device, where the electronic device includes:
a receiver 901, configured to obtain, by using a neighbor awareness network NAN, a message sent by the second device, where
the receiver is further configured to receive a first message broadcasted by the second device; and/or listen to a second message that the second device responds to another device in the NAN; and
a processor 902, configured to: when the message includes access point AP description information that the electronic device needs to obtain, obtain the AP description information from the message, where both the electronic device and the second device are in the NAN.

Optionally, the electronic device further includes:
a transmitter 903, configured to: when the message does not include the AP description information that the first device needs to obtain, send a query message to a third device in the NAN, where the query message is used to search for an AP; and
the receiver is further configured to receive a response message that the third device sends in response to the query message, where the response message includes description information, of at least one AP, obtained by the third device.

Optionally, the processor is further configured to determine, according to channel and time information, a service window for receiving the message sent by the second device, where the second device is in a working state within a specified time corresponding to the service window; and
that the transmitter obtains, by using the NAN, the message sent by the second device specifically includes: obtaining, by using the service window, the message sent by the second device.

The one or more technical solutions in the foregoing embodiments of this application have at least the following technical effects:

In the solutions provided in the embodiments of the present invention, after a device is synchronized to an NAN, during AP discovery, the device can directly obtain AP description information by using device sharing information included by the NAN. There is no need to send scan messages on different channels, which omits management messages consumed for performing scanning on existing 11 channels, saves air interface resources, and improves AP discovery efficiency.

In the embodiments, a response message includes all AP information that a response device knows, thereby increasing a quantity of discovered APs, and shortening a device discovery time.

In addition, before joining the NAN, the first device may discover whether the NAN supports a service for querying an AP. If the NAN supports, the first device joins the NAN, and executes a subsequent AP querying operation, thereby accelerating device discovery and omitting management messages.

The methods described in the present invention are not limited to the embodiments in the description of embodiments. Another embodiment derived by a person skilled in the art according to technical solutions of the present invention also belongs to a technical innovation scope of the present invention.

Obviously, a person skilled in the art can make various modifications and variations to the present invention without departing from the spirit and scope of the present invention. The present invention is intended to cover these modifications and variations provided that they fall within the scope of protection defined by the following claims and their equivalent technologies.

## Claims

1. An access point AP discovery method, wherein the method is applied to a neighbor awareness network NAN, the NAN comprises a first device and a second device, and the method comprises:
sending, by the first device, a query message to the second device by using the NAN, wherein the query message is used to search for an access point AP; and
receiving a response message that the second device sends in response to the query message, wherein the response message comprises description information, of at least one AP, obtained by the second device.

2. The method according to claim 1, wherein the AP description information comprises: AP description information obtained when the second device is used as an AP and/or AP description information, obtained by the second device, associated with the second device.

3. The method according to claim 2, wherein the AP description information, obtained by the second device, of an AP associated with the second device comprises: first AP description information of a neighbor AP of the second device; or second AP description information obtained when the second device searches for an AP; or third AP description information obtained when the second device receives AP information that another device registers at the second device, wherein the third AP description information is AP description information obtained by the another device.

4. The method according to any one of claims 1 to 3, wherein the sending, by the first device, a query message to the second device by using the NAN comprises:
determining, according to channel and time information, a service window for sending the query message, and sending the query message to the second device by using the determined service window, wherein the second device in the NAN is in a working state within a specified time corresponding to the service window.

5. The method according to claim 4, wherein the receiving a response message that the second device sends in response to the query message comprises:
receiving the response message in the service window for sending the query message; and/or
receiving the response message on a channel and within a time that are corresponding to preset channel information and time information.

6. The method according to any one of claims 1 to 5, wherein the query message carries a characteristic parameter, so that the second device that receives the query message adds, to the response message, AP description information that matches the characteristic parameter.

7. The method according to any one of claims 1 to 6, wherein before the sending, by the first device, a query message to the second device by using the NAN, the method further comprises:
receiving, by the first device, service support information that is of a service supported by the NAN and that is sent by a device in the NAN; and
when it is determined, according to the service support information, that the service supported by the NAN comprises a service for searching for an access point AP, synchronizing to the NAN.

8. An access point AP discovery method, wherein the method is applied to a neighbor awareness network NAN, the NAN comprises a first device and a second device, and the method comprises:
receiving, by the second device by using the NAN, a query message sent by the first device, wherein the query message is used to search for an access point AP; and
sending, by the second device in response to the query message, a response message to the first device, wherein the response message comprises description information, of at least one AP, obtained by the second device.

9. The method according to claim 8, wherein the AP description information comprises: AP description information obtained when the second device is used as an AP and/or AP description information, obtained by the second device, of an AP associated with the second device.

10. The method according to claim 9, wherein the AP description information, obtained by the second device, of each AP associated with the second device comprises: first AP description information of a neighbor AP of the second device; or second AP description information obtained when the second device searches for an AP; or third AP description information obtained when the second device receives AP information that another device registers at the second device, wherein the third AP description information is AP description information obtained by the another device.

11. The method according to any one of claims 8 to 10, wherein the receiving, by the second device by using the NAN, a query message sent by the first device comprises:
determining, according to channel and time information, a service window for receiving the query message, and receiving the query message by using the determined service window, wherein the second device is in a working state within a specified time corresponding to the service window.

12. The method according to any one of claims 8 to 11, wherein before the sending, by the second device in response to the query message, a response message to the first device, the method further comprises:
obtaining, by the second device, a characteristic parameter carried in the query message, and adding, to the response message, AP description information that matches the characteristic parameter.

13. The method according to claim 12, before the adding, to the response message, AP description information that matches the characteristic parameter, further comprising:
determining, by the second device according to the characteristic parameter, whether there exists AP description information that matches the characteristic parameter and is in the obtained description information of at least one AP, and if there exists AP description information that matches the characteristic parameter and is in the obtained description information of at least one AP, adding at least one piece of the matched AP description information to the response message.

14. An access point AP discovery method, wherein the method is applied to a neighbor awareness network NAN, the NAN comprises a first device and a second device, and the method comprises:
obtaining, by the first device by using the NAN, a message sent by the second device; and
detecting, by the first device, whether the message comprises access point AP description information that the first device needs to obtain, and if the message comprises the access point AP description information that the first device needs to obtain, obtaining the AP description information from the message.

15. The method according to claim 14, wherein the method further comprises:
if the message does not comprise the AP description information that the first device needs to obtain, sending, by the first device, a query message to a third device in the NAN, wherein the query message is used to search for an AP; and
receiving a response message that the third device sends in response to the query message, wherein the response message comprises description information, of at least one AP, obtained by the third device.

16. The method according to claim 14 or 15, wherein the obtaining, by the first device by using the NAN, a message sent by the second device comprises:
determining, according to channel and time information, a service window for receiving the message sent by the second device, and obtaining, by using the determined service window, the message sent by the second device, wherein the second device is in a working state within a specified time corresponding to the service window.

17. The method according to any one of claims 14 to 16, wherein the obtaining, by the first device by using the NAN, a message sent by the second device comprises:
receiving, by the first device, a first message broadcasted by the second device; and
sensing, by the first device, a second message that the second device responds to another device in the NAN.

18. An access point AP discovery apparatus, wherein the apparatus is applied to a neighbor awareness network NAN, the NAN comprises a first device and a second device, the apparatus is disposed in the first device, and the apparatus comprises:
a sending module, configured to send a query message to the second device by using the NAN, wherein the query message is used to search for an access point AP; and
a receiving module, configured to receive a response message that the second device sends in response to the query message, wherein the response message comprises description information, of at least one AP, obtained by the second device.

19. The apparatus according to claim 18, wherein the AP description information received by the receiving module comprises: AP description information obtained when the second device is used as an AP and/or AP description information, obtained by the second device, associated with the second device.

20. The apparatus according to claim 19, wherein the AP description information, obtained by the second device and received by the receiving module, of an AP associated with the second device comprises: first AP description information of a neighbor AP of the second device; or second AP description information obtained when the second device searches for an AP; or third AP description information obtained when the second device receives AP information that another device registers at the second device, wherein the third AP description information is AP description information obtained by the another device.

21. The apparatus according to any one of claims 18 to 20, wherein the sending module is specifically configured to determine, according to channel and time information, a service window for sending the query message, and send the query message to the second device by using the determined service window, wherein the second device in the NAN is in a working state within a specified time corresponding to the service window.

22. The apparatus according to claim 21, wherein the receiving module is specifically configured to receive the response message in the service window for sending the query message; and/or receive the response message on a channel and within a time that are corresponding to preset channel information and time information.

23. The apparatus according to any one of claims 18 to 22, wherein the sending module is further configured to add a characteristic parameter to the query message, so that the second device that receives the query message adds, to the response message, AP description information that matches the characteristic parameter.

24. The apparatus according to any one of claims 18 to 23, wherein the apparatus further comprises:
a synchronization module, configured to receive service support information that is of a service supported by the NAN and that is sent by a device in the NAN; and when it is determined, according to the service support information, that the service supported by the NAN comprises a service for searching for an access point AP, synchronize to the NAN.

25. An access point AP discovery apparatus, wherein the apparatus is applied to a neighbor awareness network NAN, the NAN comprises a first device and a second device, the apparatus is disposed in the second device in the neighbor awareness network NAN, and the apparatus comprises:
a message receiving module, configured to receive, by using the NAN, a query message sent by the first device, wherein the query message is used to search for an access point AP; and
a feedback module, configured to send a response message to the first device in response to the query message, wherein the response message comprises description information, of at least one AP, obtained by the second device.

26. The apparatus according to claim 25, wherein the feedback module is configured to add the AP description information to the response message, wherein AP description information obtained when the second device is used as an AP and/or AP description information, obtained by the second device, of an AP associated with the second device are/is used as the AP description information.

27. The apparatus according to claim 26, wherein the feedback module is further configured to add the AP description information, obtained by the second device, of each AP associated with the second device to the response message, wherein first AP description information of a neighbor AP of the second device, or second AP description information obtained when the second device searches for an AP, or third AP description information obtained when the second device receives AP information that another device registers at the second device is used as the AP description information, obtained by the second device, of each AP associated with the second device, wherein the third AP description information is AP description information obtained by the another device.

28. The apparatus according to any one of claims 25 to 27, wherein the message receiving module is specifically configured to determine, according to channel and time information, a service window for receiving the query message, and receive the query message by using the determined service window, wherein the second device is in a working state within a specified time corresponding to the service window.

29. The apparatus according to any one of claims 25 to 28, wherein the apparatus further comprises:
a matching module, configured to obtain a characteristic parameter carried in the query message; and add, to the response message, AP description information that matches the characteristic parameter.

30. The apparatus according to claim 29, wherein the matching module is further configured to determine, according to the characteristic parameter, whether there exists AP description information that matches the characteristic parameter and is in the obtained description information of at least one AP, and if there exists AP description information that matches the characteristic parameter and is in the obtained description information of at least one AP, add at least one piece of the matched AP description information to the response message.

31. An access point AP discovery apparatus, wherein the apparatus is applied to a neighbor awareness network NAN, the NAN comprises a first device and a second device, the apparatus is disposed in the first device, and the apparatus comprises:
an obtaining module, configured to obtain, by using the NAN, a message sent by the second device; and
a detection module, configured to detect whether the message comprises access point AP description information that the first device needs to obtain, and if the message comprises the access point AP description information that the first device needs to obtain, obtain the AP description information from the message.

32. The apparatus according to claim 31, wherein the apparatus further comprises:
a query module, configured to: if the message does not comprise the AP description information that the first device needs to obtain, send a query message to a third device in the NAN, wherein the query message is used to search for an AP; and receive a response message that the third device sends in response to the query message, wherein the response message comprises description information, of at least one AP, obtained by the third device.

33. The apparatus according to claim 31 or 32, wherein the query module is specifically configured to determine, according to channel and time information, a service window for receiving the message sent by the second device, and obtain, by using the determined service window, the message sent by the second device, wherein the second device is in a working state within a specified time corresponding to the service window.

34. The apparatus according to any one of claims 31 to 33, wherein the obtaining module is specifically configured to receive a first message broadcasted by the second device; and/or listen to a second message that the second device responds to another device in the NAN.

35. An electronic device, comprising:
a transceiver, configured to send a query message to a second device by using a neighbor awareness network NAN, wherein the query message is used to search for an access point AP; and receive a response message that the second device sends in response to the query message, wherein the response message comprises description information, of at least one AP, obtained by the second device, and both the electronic device and the second device are in the NAN.

36. The electronic device according to claim 35, wherein the electronic device further comprises:
a processor, configured to determine, according to channel and time information, a service window for sending the query message, wherein the second device in the NAN is in a working state within a specified time corresponding to the service window; and
that the transceiver sends the query message to the second device by using the NAN specifically comprises: sending the query message to the second device by using the service window.

37. An electronic device, comprising:
a transceiver, configured to receive, by using a neighbor awareness network NAN, a query message sent by a first device, wherein the query message is used to search for an access point AP; and send a response message to the first device in response to the query message, wherein the response message comprises description information, of at least one AP, obtained by the second device, and both the electronic device and the second device are in the NAN.

38. The apparatus according to claim 37, wherein the apparatus further comprises:
a processor, configured to determine, according to channel and time information, a service window for receiving the query message, wherein the second device is in a working state within a specified time corresponding to the service window; and
that the transceiver receives, by using the NAN, the query message sent by the first device specifically comprises: receiving the query message by using the service window.

39. An electronic device, comprising:
a receiver, configured to obtain, by using a neighbor awareness network NAN, a message sent by the second device; and
a processor, configured to: when the message comprises access point AP description information that the electronic device needs to obtain, obtain the AP description information from the message, wherein both the electronic device and the second device are in the NAN.

40. The apparatus according to claim 39, wherein the apparatus further comprises:
a transmitter, configured to: when the message does not comprise the AP description information that the first device needs to obtain, send a query message to a third device in the NAN, wherein the query message is used to search for an AP; and
the receiver is further configured to receive a response message that the third device sends in response to the query message, wherein the response message comprises description information, of at least one AP, obtained by the third device.

41. The apparatus according to claim 39 or 40, wherein the processor is further configured to determine, according to channel and time information, a service window for receiving the message sent by the second device, wherein the second device is in a working state within a specified time corresponding to the service window; and
that the transmitter obtains, by using the NAN, the message sent by the second device specifically comprises: obtaining, by using the service window, the message sent by the second device.
